# EUROPEAN PATENT SPECIFICATION

(11) **EP 1 472 584 B1**
(45) Date of publication and mention of the grant of the patent: **30.11.2005**
(21) Application number: 02785858.8
(22) Date of filing: 13.12.2002
(51) Int. Cl.: G06F 1/00, H04N 1/44, H04K 1/00

(54) **SECURE DATA INPUT DIALOGUE USING VISUAL CRYPTOGRAPHY**
GESICHERTER DATENEINGABEDIALOG MITTELS VISUELLER KRYPTOGRAPHIE
DIALOGUE D'ENTREE DE DONNEES SECURISE PAR CRYPTOGRAPHIE VISUELLE

(30) Priority: 17.01.2002 EP 02075178
(43) Date of publication of application: 03.11.2004
(73) Proprietor: Koninklijke Philips Electronics N.V., 5621 BA Eindhoven (NL)
(72) Inventor: STARING, Antonius, A., M., NL-5656 AA Eindhoven (NL); VAN DIJK, Marten, E., NL-5656 AA Eindhoven (NL); TUYLS, Pim, T., NL-5656 AA Eindhoven (NL)
(74) Representative: Groenendaal, Antonius W. M.
(86) International application number: PCT/IB2002/005423
(87) International publication number: WO 2003/060674

(56) References cited:
- CA-A- 2 214 190
- FR-A- 2 806 230
- US-A- 5 428 349
- US-A- 5 970 146
- US-B1- 6 209 102
- NAOR M ET AL: "Visual cryptography" ADVANCES IN CRYPTOLOGY. EUROCRYPT, XX, XX, 12 May 1994 (1994-05-12), pages 1-12, XP002205767 cited in the application

## Description

The invention relates to a method of secure reception of a message from a user, to a method of secure transmission of such a message, and to a client device.

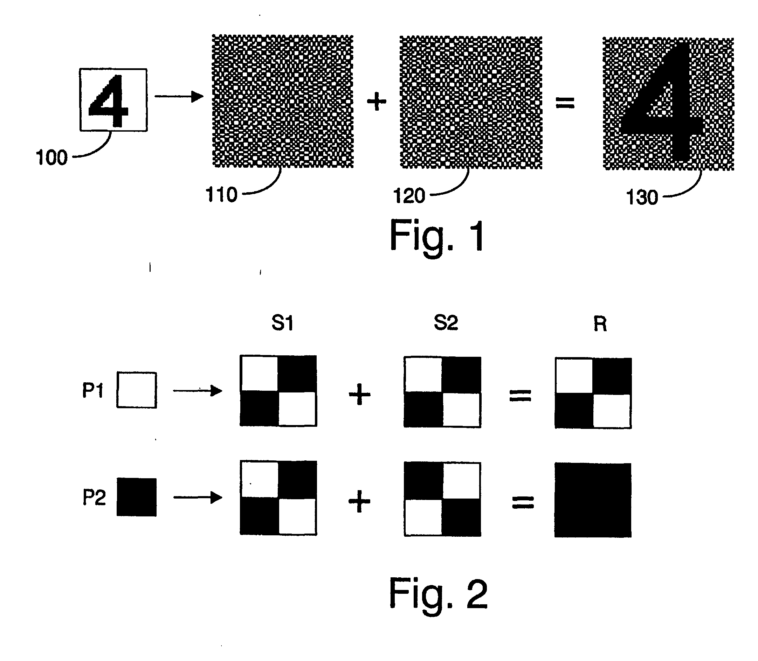

Visual cryptography (M. Naor, A. Shamir: Visual Cryptology, Eurocrypt '94, Springer-Verlag LNCS Vol.950, Springer-Verlag, 1995, ppl-12) can briefly be described as follows. An image is split into two randomized parts, the image plus a randomization and the randomization itself. Either part contains no information on the original image because of the randomization. However, when both parts are physically overlaid the original image is reconstructed. An example is given in Fig. 1: original image 100 is split into shares 110 and 120, which when overlaid result in reconstructed image 130.

If the two parts do not fit together no information on the original image is revealed and a random image is produced. Therefore if two parties want to communicate using visual cryptography, they have to share the randomization. A basic implementation would be to give a receiving party a transparency containing the randomization. The sender would then use this randomization to randomize the original message.

A basic property of visual cryptography is that image reconstruction (or decryption) is performed directly by the human eye (pattern recognition) and not by a device which might be compromised. This makes the use of visual cryptography to communicate secret information more secure. However, the use of transparencies is not very practical. For one thing, the patterns on the transparency used by the receiver are fixed, so that for each message a new transparency is necessary. If the same transparency is re-used, the security of the system is severely reduced. The security of this system is comparable to the security of a classic one-time pad.

FR-A-2806230 discloses a device for decryption of confidential information. The encrypted information is displayed on a computer screen. A graphical key is received by a separate liquid crystal display device. To decrypt the information, the display device, displaying the graphical key, is positioned between the computer screen and the user.

CA-A-2214190 discloses an improved security data entry alphanumeric keypad. The keys on the keypad are reorganized after every use. Thus the location that is pressed on the keypad has no relationship to the actual letter and/or number that the user is selecting. A polarized lens, concave faceplate or key design over LED or LCD keys or display restricts the field of visibility to a very narrow band immediately in front of the user.

It is an object of the invention to provide a method of secure reception of a message.

This object is achieved according to the invention in a method comprising generating an image representing a plurality of input means each representing an input symbol that can be used in the message, encoding the image by, for each pixel in the image, choosing a first pattern if the pixel is of a first color and a portion of a key sequence represents a first value, or if the pixel is of a second color and the portion represents a second value, and choosing a second pattern if the pixel is of the second color and the portion represents the first value, or if the pixel is of the first color and the portion represents the second value, transmitting for each pixel the pertinent chosen pattern to a device operable by the user, receiving a set of coordinates from the device, translating the set of coordinates to a particular input means represented on the image, and constructing the message from the user as the input symbol represented by the particular input means.

Preferably the first color is black, the second color is white, the first value is '0' and the second value is '1'. The image is encoded using a particular form of visual cryptography, based on knowledge of a key sequence in the client device. Only the chosen patterns are transmitted to the client device. This way, only the client device with that particular key sequence can generate the pattern suitable for reconstructing the original image.

Upon reception of the patterns, the client device reconstructs the image, so that the user can see the input means as placed on the image. He can then operate these input means and select particular ones, e.g. by operating a cursor or other input device to select a particular spot on the first display. The coordinates are then transmitted back. The message can now be reconstructed by translating the received coordinates to the particular input means represented on the original image, and taking the input word(s) represented by those input means as the message.

In an embodiment the message comprises an authentication code. The method according to the invention is particularly well suited for authenticating users. Authenticating often involves the transmission of a secret code from the user to a server over a potentially compromised channel, and using an input device that needs to be trusted not to record the secret code. Using the method according to the invention, the secret code is not transmitted over any channel at all, and a compromised input device cannot learn the secret code either.

In an embodiment the placement of the input means on the image is chosen in a random fashion. It is possible that an attacker observes the user as he selects particular input means as represented in the image. Additionally, the sets of coordinates will be the same every time if the input means are always positioned in the same locations on the image. By randomizing the placement every time an image is generated, the observations made by the attacker are of no use, as he cannot re-use these observations to later impersonate the user.

It is a further object of the invention to provide a method of secure transmission of a message.

This object is achieved according to the invention in a method comprising receiving a pattern from a transmitting device, outputting on a first display a graphical representation of the pattern, outputting on a second display a graphical representation of a first pattern if a portion of a key sequence represents a first value, and outputting on the second display a graphical representation of a second pattern if said portion represents a second value, receiving input representing a set of coordinates from a user, and transmitting the set of coordinates to the transmitting device.

As explained above, an image representing a plurality of input means is encoded using a particular form of visual cryptography, and one set of the resulting patterns is sent to a client device. The received pattern is displayed on a first display. Observe that no processing or decrypting step is necessary in the device before any displaying takes place; the patterns are displayed as they are received. On a second display another pattern is displayed, which is generated based entirely on a key sequence. Reconstruction of the image is performed by superimposing the first and second displays in the correct alignment, so that the user can see the reconstructed image.

This way the input means will appear, and the user can indicate the coordinates of the input means he wants to select, e.g. by operating a cursor or other input device to select a particular spot on the first display. The coordinates are then transmitted back to the transmitting device, so that in the transmitting device the message can be reconstructed by translating the received coordinates to the particular input means represented on the original image, and taking the input word(s) represented by those input means. At no time is the reconstructed image as a whole available in electronic form; only the user can see it.

In an embodiment the input is received as pressure on a particular spot of the first display, the set of coordinates corresponding to the particular spot. Using a touch-screen is a very easy way of selecting input means on a display. Further, it is not necessary to display a cursor or other indication on the first or second display, which cursor might interfere with the display of the patterns.

It is a further object of the invention to provide a client device allowing secure transmission of a message.

This object is achieved according to the invention in a client device comprising receiving means for receiving a pattern from a transmitting device, a memory for storing a key sequence, a first display for outputting a graphical representation of the pattern, a second display suitable to be overlaid upon the first display, the second display being arranged for outputting a graphical representation of a first pattern if a portion of the key sequence represents a first value, and for outputting a graphical representation of a second pattern if said portion represents a second value, input means configured to receive input representing a set of coordinates from a user, and transmitting means configured to transmit the set of coordinates to the transmitting device.

In an embodiment the second display is embodied as a unit physically separate from the first display, and provided with the memory for storing the key sequence. No electrical, optical or other communication paths between the first and second displays, or the devices in which they are embodied, should exist. As the patterns and the key sequence are provided in digital (electronic) form, any such communication paths could potentially be abused by an attacker to obtain patterns and/or key sequence. This way, it is achieved that the user does not have to trust the security of the client device, but only this separate unit.

The invention further relates to computer program products arranged for causing a processor to execute the methods according to the invention, and to a server.

These and other aspects of the invention will be apparent from and elucidated with reference to the embodiments shown in the drawing, in which:
Fig. 1 shows an original image, two shares obtained by visually encrypting the original image and a reconstructed image obtained by superimposing the two shares;
Fig. 2 illustrates the visual cryptography process as devised by Naor and Shamir in the above-referenced paper;
Fig. 3 schematically shows a system comprising a server and several clients;
Fig. 4 shows a flowchart illustrating an embodiment of a method to securely receive a message from a user; and
Figs. 5A-C schematically illustrate the operation of the client device.

Throughout the figures, same reference numerals indicate similar or corresponding features. Some of the features indicated in the drawings are typically implemented in software, and as such represent software entities, such as software modules or objects.

Fig. 1 shows an original image 100, two shares 110, 120 and a reconstructed image 130. The shares 110, 120 were obtained by applying visual cryptography to the original image 100. Visual cryptography is explained in more detail with reference to Fig. 2 below. By superimposing the shares 110, 120 the reconstructed image 130 appears. Note that the reconstruction is not perfect; the white parts of the original image 100 turn into a randomized black and white pattern in the reconstructed image 130.

Fig. 2 illustrates the visual cryptography process as devised by Naor and Shamir in the above-referenced paper. The process is illustrated here for a single pixel, but of course every pixel in the source image is to be processed in this way.

Every pixel of the original image 100 is mapped to a particular pattern, in this embodiment by splitting every pixel into four sub-pixels. To generate the first share S1 for this pixel, two of the four pixels are chosen to be black (non-transparent) while the other two are chosen to be white (transparent). To generate the other share S2 of this pixel the four sub-pixels are copied if the corresponding pixel in the original image was white and they are inverted if the original pixel was black. For each pixel a new random choice of which two of the four pixels should be black (non-transparent) needs to be made. The number of sub-pixels into which the pixels are split can be chosen arbitrarily.

This way, two collections of sub-pixels are formed. These collections make up the two shares. Neither of the shares gives any information on the color of the original pixel. In all cases, two of the four sub-pixels chosen to represent the original pixel in either of the shares are black and the other two are white. Further, all possible combinations of black and white are equally likely to occur, since the random choice is made with a probability of p=0.5, independently for each pixel.

To reconstruct the original image, the two shares S1 and S2 are to be superimposed, i.e. put on top of each other. This is shown in the last column (R) of Fig. 2. If the original pixel (P1) were black, then the superposition of the sub-pixels from shares S1 and S2 will result in four black sub-pixels. If the original pixel where white (P2), then the superposition of the sub-pixels from shares S1 and S2 will result in a black and white pattern in the reconstructed image 130, which often appears to be gray when seen from a distance. Also note that the resolution of the reconstructed image 130 is four times lower than the resolution of the original image 100, since every pixel has been translated to a pattern of 2x2 pixels. This makes the reconstructed image 130 four times as large as the original image 100.

If the two parts do not fit together no information on the original image is revealed and a random image is produced. Without knowing both of the shares, the probability that one set of sub-pixels corresponds to a white pixel in the original image 100 is equal to the probability that that set corresponds to a black pixel in the original image 100.

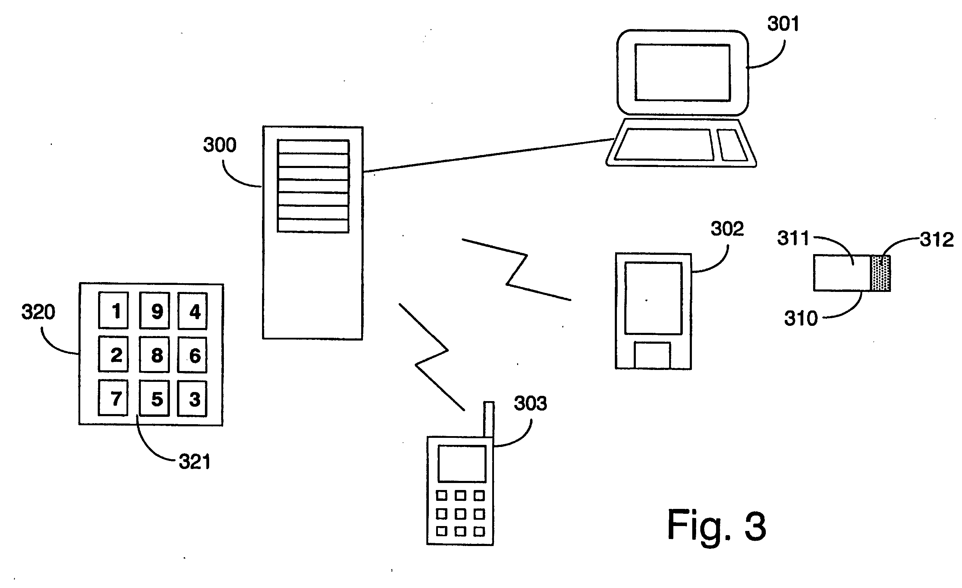

Fig. 3 schematically shows a system according to the invention, comprising a server 300 and several clients 301, 302, 303. While the clients 301-303 are embodied here as a laptop computer 301, a palmtop computer 302 and a mobile phone 303, they can in fact be realized as any kind of device, as long as the device is able to interactively communicate with the server 300 and is able to render graphical images on a display. The communication can take place over a wire, such as is the case with the laptop 301, or wirelessly like with the palmtop computer 302 and the mobile phone 303. A network such as the Internet or a phone network could interconnect the server 300 and any of the clients 301-303.

To realize secure communication between server 300 and clients 301-303, the server 300 generates an image 320 representing a plurality of input means 321, shown here as numerical keys labeled '1' through '9'. Next to keys, the input means 321 could also be checkboxes, selection lists, sliders or other elements typically used in user interfaces to facilitate user input. Having received the image on his client 301-303, the user can select one or more of the input means 321. The selection is then transmitted back to the server 300. The image 320 will be encoded using visual cryptography before transmission, as will become apparent below.

Also shown in Fig. 3 is a personal decryption device 310. This device 310 is personal to a user and should be guarded well, as it is to be used to decrypt visually encoded messages sent by the server 300 to any of the clients 301-303. Anyone who gains physical control over the decryption device 310 can read all visually encrypted messages intended for the user. The workings of this device 310 will become apparent below.

The decryption device 310 comprises a display 311 and a storage area 312. The display 311 is preferably realized as a Liquid Crystal Display (LCD) screen. The storage area 312 comprises at least a key sequence to be used in decrypting visually encrypted images. The key sequence is preferably realized as a sequence of bits, e.g. '011010111010'. The length of the key sequence stored in the storage area 312 should be long enough to accommodate a large number of decryption operations. When decrypting visually encrypted images, one bit is necessary for every pixel of the original input image. So, if 100×100 pixel images are to be decrypted, 10,000 bits are necessary per image.

Also, after every decryption operation, the key bits used are preferably discarded or marked as used. This way every decryption operation involves the use of a unique subsection of the key sequence. When all key bits have been used, the key sequence in the storage area 312 must be replaced. This can be realized by e.g. asking the owner of the decryption device 310 to replace his decryption device 310 with a new specimen, or to visit a secure location like a bank where it is loaded with a new key sequence.

Alternatively, when a key sequence has been used, a cryptographic hash function or symmetric encryption scheme can be applied to the key sequence. The output of the hash function or encryption scheme is then used as the new key. This way a series of key sequences can be generated of any length, without having to store all of the key sequences in the personal decryption device 310. Of course, if even one key sequence in the series becomes known to an attacker, the attacker can also reconstruct all future key sequences.

The decryption device 310 is preferably embodied as a unit physically separate, or at least separable, from the client device 301-303. No electrical, optical or other communication paths between the decryption device 310 and the client should exist. As the patterns and the key sequence are provided in digital (electronic) form, any such communication paths could potentially be abused by an attacker to obtain patterns and/or key sequence. Without such paths, a compromised client device cannot obtain information from the decryption device 310 in any way. This way, it is achieved that the user does not have to trust the security of the client 301.

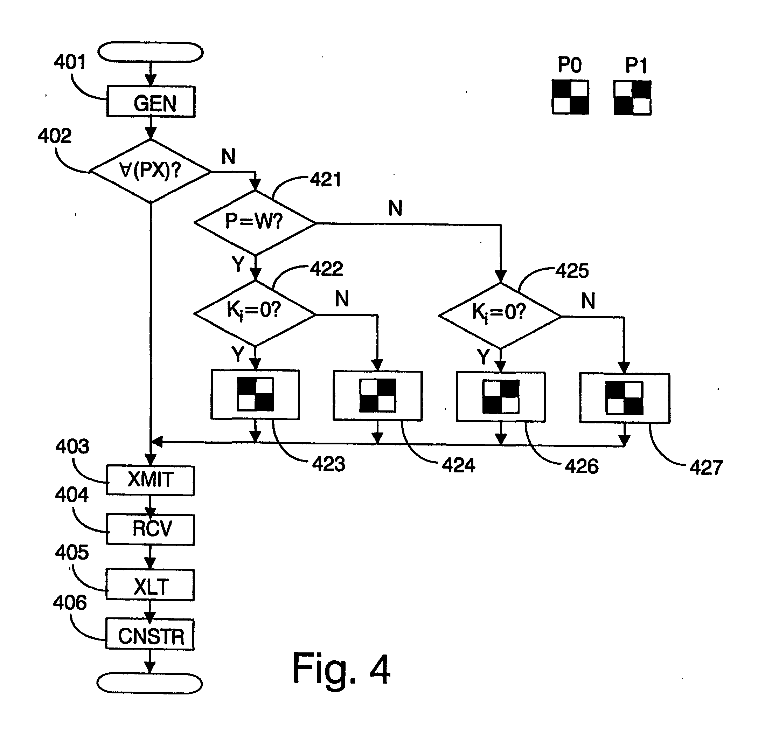

Fig. 4 shows a flowchart illustrating an embodiment of a method to securely receive a message from a user. Using this method, it is possible to securely allow a user to compose a message and to transmit said message using a client device, for the sake of example chosen as laptop 301, to the server 300.

At step 401, an image, e.g. image 320, is generated that represents a plurality of input means such as keys on a keyboard. Each input means represents an input word that can be used in the message that will be composed by the user. The user must compose the message by selecting keys or other input means rendered as an image on the display of the client device 301. Such keys could be visually rendered as keys representing different alphanumerical characters, or as buttons representing choices like 'Yes', 'No', 'More information' and so on. Other ways to visually represent input means are well known in the art.

Selecting the input means is preferably done by selecting a particular set of coordinates on the display of the client device 301. Preferably, the user inputs the set of coordinates as pressure on a particular spot of the display, the set of coordinates corresponding to the particular spot. Of course, other input means such as a mouse, a graphics tablet or even a keyboard can also be used.

By itself it is known to allow composition of a message through visually rendered input means on a display, see e.g. US-B-6209102. This US patent, however, does not protect the composed message against interception by an eavesdropper. It also fails to teach how such an image representing input means can securely be transmitted to the client device 301. This means that an eavesdropper can learn the layout of the input means represented on the image, and learn from the feedback sent by the client device 301 to the server 300 which input means were selected.

It is observed that different input means may, but need not necessarily, represent different input words. Providing multiple input means representing the same input word has the advantage that a sequence of inputs made by the user appears to be random even when the sequence contains repetitions. As used here, the term "word" can mean single alphanumerical characters, but also texts like 'Yes', 'No' and so on, as well as other linguistic or symbolic elements.

Each pixel in the image is then processed in step 402. First, the pixel is examined in step 421 to determine its color. Typically images generated in step 401 will be in black and white, although of course other colors, and even more than two colors, can also be used. However, in this embodiment it is assumed that the images comprise only two colors, namely black and white. If the color of the pixel is found to be white, the method proceeds to step 422. Otherwise, the method proceeds to step 425.

As noted above, the decryption device 310 holds a key sequence in storage area 312. The server 300 holds a copy of this key sequence. Usually the server 300 knows in advance which user is operating the client device 301, and then can simply look up the appropriate key sequence. The server 300 may also want to use a particular key sequence without knowing in advance which user is operating the client device 301. This way it is ensured that only the person owning the personal decryption device with that particular key sequence can read the information contained in the message to be transmitted to the client device 301.

Every bit in the key sequence is to be used only once. To this end, usually a pointer indicating the current position in the key sequence is maintained. This current position is referred to as the i^{th} position. After using a bit from the key sequence, the pointer is increased by 1. If all the bits from the key sequence have been used, the key sequence must be replaced, or the above-mentioned hash function or symmetric encryption function should be applied to it to obtain a new key sequence. It is observed that the security of the system for a large part depends on the quality of the pseudo-random number generator used for generating key sequences.

In step 421, the i^{th} bit of the key sequence is examined to determine whether it is '0' or '1'. If it is '0', then at step 423 the pattern P0 is chosen. If it is '1', then at step 424 the pattern P1 is chosen.

Similarly, if the pixel is black, then at step 425 the i^{th} bit of the key sequence is also examined to determine whether it is '0' or '1'. If it is '0', then at step 426 the pattern P1 is chosen. If it is '1', then at step 427 the pattern P0 is chosen.

This way it is achieved that a user knowing the correct part of the key sequence used in the above steps can reconstruct the image upon reception of the chosen patterns. Each received pattern must be overlaid with either pattern P0, if the i^{th} bit of the key sequence is '0', or pattern P1, if said bit is '1'. This will recover the original white or black pixel.

When all pixels have been processed, the pertinent chosen patterns are transmitted to the client device 301. Such transmissions are straightforward to implement and will not be elaborated upon here. Note that it is not necessary to protect this transmission by e.g. encrypting the collection of chosen patterns before transmitting it. Because of the process used to choose these patterns, it is impossible for an eavesdropper to recover the image by using only the collection of chosen patterns.

The client device 301 at some point transmits one or more sets of coordinates to the server 300, as result of the user operating the input means on the client device 301. The server 300 receives the sets of coordinates in step 404. Then, in step 405 the server 300 translates each set of coordinates to a particular input means represented on the image as composed in step 401. Since the server 300 composed this image, translating a set of coordinates to an input means in the server 300 is straightforward.

Finally, in step 406 to message composed by the user is constructed as the input words represented by the particular input means to which the sets of coordinates were translated in step 405. See e.g. the above-mentioned US-B-6209102 for more information.

While the message can of course contain any kind of information, preferably the message contains an authentication code such as a PIN code or a password. The server 300 can now check the PIN code or password to verify the credentials of the user, and grant access, perform one or more privileged operations or perform some other action for which these credentials are necessary. The server 300 could also signal another system upon a successful verification of the credentials.

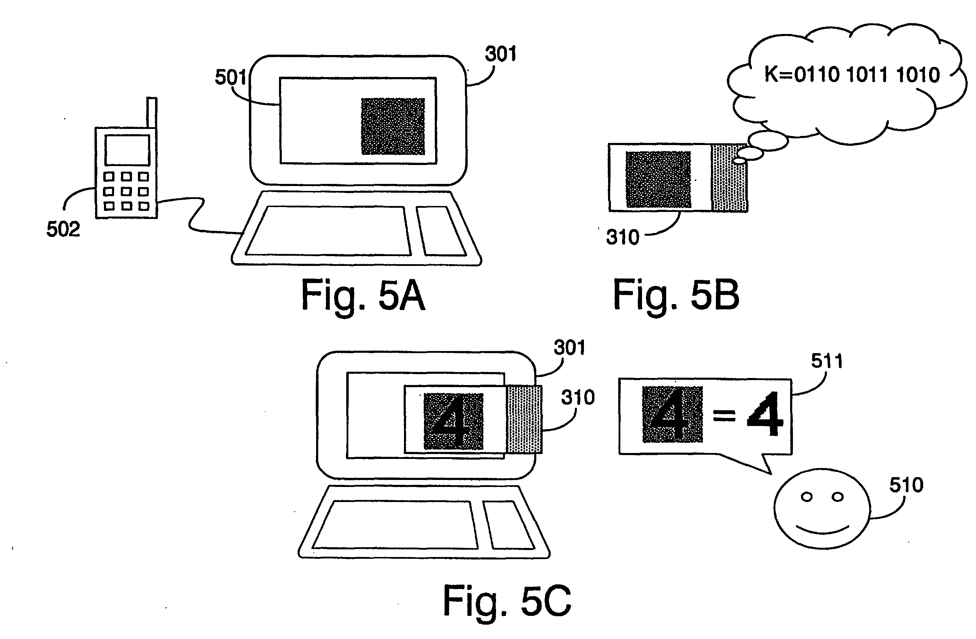

Figs. 5A-C schematically illustrate the operation of the client device 301. Assume that the client device 301 has just received a collection of patterns from the server 300. These patterns were generated in accordance with the method as explained above with reference to Fig. 3, and hence correspond to an image representing a plurality of input means each representing an input word that can be used to compose a message.

The client device 301 is in this embodiment connected to a network such as the Internet using a mobile phone 502, as is generally known in the art. Using a data connection established using the mobile phone 502, the client device 301 can transmit and receive data from the server 300.

In Fig. 5A, the device 301 receives a number of patterns from the server 300 and displays the patterns on display 501. Typically the patterns will be collections of four pixels, with two of these pixels being black and two of them being white. Observe that no processing or decrypting step is necessary in the device 301 before any displaying takes place; the patterns are displayed as they are received. It may be advantageous to display the patterns in a corner of the display 501, as will become apparent below.

Upon recognizing that a visually encrypted image has been sent to the client device 301, the user in Fig. 5B takes his personal decryption device 310 and activates it. This causes the decryption device 310 to output a graphical representation in dependence on the key sequence stored in storage area 312.

The decryption device 310 must be programmed in advance with the dimensions of the image that was generated by the server 300. Of course, an input means that allows the user to enter these dimensions for each image separately can also be provided, but this makes the decryption device 310 more complex and more expensive.

For each pixel in each row of the image generated by the server 300, the decryption device 310 outputs either the pattern P0, if the corresponding bit of the key sequence represents a '0', or the pattern P1, if the corresponding bit of the key sequence represents a '1'.

In Fig. 5C, the user 510 superimposes the personal decryption device 310 upon the patterns displayed on display 501. To facilitate such superimposing, the edge of the display 501 can be provided with hooks or clamps in a corner, (not shown) using which the personal decryption device 310 can be fastened to a particular position on top of the display 501. This way, it is very easy for the user to properly superimpose the personal decryption device 301 upon the patterns on the display 501 if these patterns are displayed in the corresponding position on the display 501.

Because both the decryption device 310 and the client device 301 effectively display one share of a visually encrypted image, the user 510 can now observe the reconstructed image. Although the resolution of this image is four times below the resolution of the original image, and white pixels in the original image have been replaced by black and white patterns in the reconstructed image, the user can still recognize the information from the original image, as shown in balloon 511.

Using the reconstructed image, the user can now operate the input means represented therein. Selecting the input means is done by selecting a particular set of coordinates on the display 501. Preferably, the user inputs the set of coordinates as pressure on a particular spot of the display 501, the set of coordinates corresponding to the particular spot. Of course, other input means such as a mouse, a graphics tablet or even a keyboard can also be used.

Because the image representing the input means can only be seen when the decryption device 310 is superimposed upon the client 301, the user is advised to apply pressure to the display 311 of the decryption device 310. This pressure will be transferred to the display of the client 301, which when equipped with a touch-sensitive screen can register the spot to which pressure was applied, and translate this to a set of coordinates.

Alternatively, the user can move a cursor on the display of the client 301 to a particular location on that display, and click a mouse button or press a key to confirm selection of an input means represented on the image. While the display of the cursor on top of the patterns is disruptive for the correct display of the patterns, it has been found in practice that such disruption is acceptable. The cursor should, however, be large enough to be detectable even when distorted, as the patterns displayed on the personal decryption device 310 will distort the appearance of the cursor. Next to a mouse or keyboard, a graphics tablet connected to device 301 can be used to control movement of a cursor on the display of device 301.

Having received one or more sets of coordinates, the client device 301 transmits these sets of coordinates to the server 300. It is observed that eavesdropping software secretly installed on the client device 301 cannot learn any passwords or sensitive information entered in this fashion. At the most, such software would be able to learn the particular sets of coordinates entered in this particular session. These sets could then be used to impersonate the user in a future session.

To prevent this type of so-called 'replay' attack, the server 300 should randomize the placement of the input means on the image generated in step 401. If the eavesdropping software then retransmits the sets of coordinates it learned, in order to impersonate the user in a subsequent session, the server 300 will not authenticate the user, as the sets of coordinates do not correspond to the correct password or other authentication code. In fact, these sets of coordinates need not even correspond to the location of input means on the image generated in the subsequent session.

It should be noted that the above-mentioned embodiments illustrate rather than limit the invention, and that those skilled in the art will be able to design many alternative embodiments without departing from the scope of the appended claims. For instance, a new image can be generated comprising a new permutation of the input means whenever a single set of coordinates is received. This introduces additional security.

The invention can be used in any kind of device in which a secure composition and transmission of messages from a client to a server is necessary. Client devices can be embodied as personal computers, laptops, mobile phones, palmtop computers, automated teller machines, public Internet access terminals, or in fact any client device that is not completely trusted by its user to not contain any malicious software or hardware.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware.

## Claims

1. A method of secure reception of a message from a user, comprising generating (401) an image (320) representing a plurality of input means (321) each representing an input symbol that can be used in the message, encoding (402) the image by, for each pixel in the image (320),
choosing (423, 427) a first pattern (P0) if the pixel is of a first color and a portion of a key sequence represents a first value, or if the pixel is of a second color and the portion represents a second value, and
choosing (424, 426) a second pattern (P1) if the pixel is of the second color and the portion represents the first value, or if the pixel is of the first color and the portion represents the second value,
transmitting (403) for each pixel the pertinent chosen pattern to a device operable by the user, receiving (404) a set of coordinates from the device, translating (405) the set of coordinates to a particular input means represented on the image (320), and constructing (406) the message from the user as the input symbol represented by the particular input means.

2. The method of claim 1, in which the first color is black, the second color is white, the first value is '0' and the second value is '1'.

3. The method of claim 1, in which the message comprises an authentication code.

4. The method of claim 1, in which the placement of the input means on the image (320) is chosen in a random fashion.

5. A method of secure transmission of a message, comprising receiving a pattern from a transmitting device (300), outputting on a first display (501) a graphical representation of the pattern, outputting on a second display (311) a graphical representation of a first pattern (P0) if a portion of a key sequence represents a first value, and outputting on the second display (311) a graphical representation of a second pattern (P1) if said portion represents a second value, receiving input representing a set of coordinates from a user, and transmitting the set of coordinates to the transmitting device (300).

6. The method of claim 5, in which the input is received as pressure on a particular spot of the first display (501), the set of coordinates corresponding to the particular spot.

7. A client device (301) allowing secure transmission of a message, comprising receiving means (502) for receiving a pattern from a transmitting device, a memory (312) for storing a key sequence, a first display (501) for outputting a graphical representation of the pattern, a second display (311) suitable to be overlaid upon the first display (501), the second display (311) being arranged for outputting a graphical representation of a first pattern (P0) if a portion of the key sequence represents a first value, and for outputting a graphical representation of a second pattern (P1) if said portion represents a second value, **characterized by** input means configured to receive input representing a set of coordinates from a user, and transmitting means (502) configured to transmit the set of coordinates to the transmitting device (300).

8. The client device (301) of claim 7, in which the second display (311) is embodied as a unit (310) physically separate from the first display (501), and provided with the memory (312) for storing the key sequence.

9. A computer program product arranged for causing a processor to execute the method of claim 1.

10. A computer program product arranged for causing a processor to execute the method of claim 5.

11. A server (300) for secure reception of a message from a user, comprising means for generating (401) an image (320) representing a plurality of input means (321) each representing an input symbol that can be used in the message,
means for encoding (402) the image by, for each pixel in the image (320),
choosing (423, 427) a first pattern (P0) if the pixel is of a first color and a portion of a key sequence represents a first value, or if the pixel is of a second color and the portion represents a second value, and
choosing (424, 426) a second pattern (P1) if the pixel is of the second color and the portion represents the first value, or if the pixel is of the first color and the portion represents the second value,
means for transmitting (403) for each pixel the pertinent chosen pattern to a device operable by the user,
means for receiving (404) a set of coordinates from the device, translating (405) the set of coordinates to a particular input means represented on the image (320), and means for constructing (406) the message from the user as the input symbol represented by the particular input means.

## Patentansprüche

1. Verfahren zum gesicherten Empfang einer Nachricht von einem Benutzer, wobei dieses Verfahren die nachfolgenden Verfahrensschritte umfasst:
das Erzeugen (401) eines Bildes (320), das eine Anzahl Eingabemittel (321) darstellt, die je ein Eingabesymbol darstellen, das in der Nachricht verwendet werden kann,
das Codieren (402) des Bildes, und zwar, für jedes Pixel in dem Bild (320) durch:
-- die Wahl (423, 427) eines ersten Musters (P0), wenn das Pixel von einer ersten Farbe ist und ein Teil einer Tastensequenz einen ersten Wert darstellt, oder wenn das Pixel von einer zweiten Farbe ist und der Teil einen zweiten Wert darstellt, und
-- die Wahl (424, 426) eines zweiten Musters (P1), wenn das Pixel von einer zweiten Farbe ist und der Teil den ersten Wert darstellt, oder wenn das Pixel von der ersten Farbe ist und der Teil den zweiten Wert darstellt,
das Übertragen (403) des entsprechend gewählten Musters für jedes Pixel zu einer Anordnung, die von dem Benutzer betrieben werden kann,
das Empfangen (404) eines Satzes von Koordinaten von der Anordnung,
das Übersetzen (405) des Satzes von Koordinaten in ein bestimmtes Eingabemittel, dargestellt in dem Bild (320), und
das Konstruieren (406) der Nachricht von dem Benutzer als Eingabesymbol, dargestellt durch das bestimmte Eingabemittel.

2. Verfahren nach Anspruch 1, wobei die erste Farbe Schwarz ist, die zweite Farbe Weiß ist, der erste Wert "0" ist und der zweite Wert "1" ist.

3. Verfahren nach Anspruch 1, wobei die Nachricht einen Authentifizierungscode enthält.

4. Verfahren nach Anspruch 1, wobei Platzierung des Eingabemittels in dem Bild (320) auf eine beliebige Art und Weise gewählt wird.

5. Verfahren zur gesicherten Übertragung einer Nachricht, wobei dieses Verfahren die nachfolgenden Verfahrensschritte umfasst:
das Empfangen eines Musters von einer Übertragungsanordnung (300),
das Ausliefern einer ersten graphischen Darstellung des Musters an einer ersten Display (501),
das Ausliefern einer graphischen Darstellung eines ersten Musters (P0) an einer zweiten Display (311), wenn ein Teil einer Tastensequenz einen ersten Wert darstellt, und
das Ausliefern einer graphischen Darstellung eines zweiten Musters (P1) an der zweiten Display (311), wenn der genannte Teil einen zweiten Wert darstellt,
das Empfangen der Eingabe, die einen Satz von Koordinaten von einem Benutzer darstellt, und
das Übertragen des Satzes von Koordinaten zu der Überträgungsanordnung (300).

6. Verfahren nach Anspruch 5, wobei die Eingabe als Druck an einer bestimmten Stelle der ersten Display (501) empfangen wird, wobei der Satz von Koordinaten mit der betreffenden Stelle übereinstimmt.

7. Kundenanordnung (301), die eine gesicherte Übertragung einer Nachricht ermöglicht, wobei die Anordnung die nachfolgenden Elemente umfasst:
Empfangsmittel (502) zum Empfangen eines Musters von einer Übertragungsanordnung, einen Speicher (312) zur Speicherung einer Tastensequenz,
eine erste Display (501) zum Ausliefern einer graphischen Darstellung des Musters,
eine zweite Display (311), die dazu geeignet ist, über die erste Display (501) gelegt werden kann, wobei die zweite Display (311) dazu vorgesehen ist, eine graphische Darstellung eines ersten Musters (P0) auszuliefern, wenn ein Teil der Tastensequenz eine ersten Wert darstellt, und zum Ausliefern einer graphischen Darstellung eines zweiten Musters (P1), wenn der genannte Teil einen zweiten Wert darstellt,
**gekennzeichnet durch** Eingabemittel, vorgesehen zum Empfangen von Eingaben, die einen Satz von Koordinaten, von einem Benutzer darstellen, und
Übertragungsmittel (502), vorgesehen zum Übertragen des Satzes von Koordinaten zu der Übertragungsanordnung (300).

8. Kundenanordnung (310) nach Anspruch 7, wobei die zweite Display (311) als eine Einheit (310) ausgebildet ist, die physikalisch von der ersten Display (501) getrennt ist, und mit dem Speicher (312) zur Speicherung der Tastensequenz versehen ist.

9. Computerprogrammprodukt, vorgesehen um dafür zu sorgen, dass ein Prozessor das Verfahren nach Anspruch 1 durchführt.

10. Computerprogrammprodukt, vorgesehen um dafür zu sorgen, dass das Verfahren nach Anspruch 5 durchgeführt wird.

11. Server (300) zum gesicherten Empfang einer Nachricht von einem Benutzer, wobei dieser Server die nachfolgenden Elemente umfasst:
Mittel zum Erzeugen (401) eines Bildes (320), das eine Anzahl Eingabemittel (321) darstellt, die je ein Eingabesymbol darstellen, das in der Nachricht verwendet werden kann,
Mittel zum Codieren (402) des Bildes, und zwar, für jedes Pixel in dem Bild (320) durch:
-- die Wahl (423, 427) eines ersten Musters (P0), wenn das Pixel von einer ersten Farbe ist und ein Teil einer Tastensequenz einen ersten Wert darstellt, oder wenn das Pixel von einer zweiten Farbe ist und der Teil einen zweiten Wert darstellt, und
-- die Wahl (424, 426) eines zweiten Musters (P1), wenn das Pixel von einer zweiten Farbe ist und der Teil den ersten Wert darstellt, oder wenn das Pixel von der ersten Farbe ist und der Teil den zweiten Wert darstellt,
Mittel zum Übertragen (403) des entsprechend gewählten Musters für jedes Pixel zu einer Anordnung, die von dem Benutzer betrieben werden kann,
Mittel zum Empfangen (404) eines Satzes von Koordinaten von der Anordnung, zum Übersetzen (405) des Satzes von Koordinaten in ein bestimmtes Eingabemittel, dargestellt in dem Bild (320), und
zum Konstruieren (406) der Nachricht von dem Benutzer als Eingabesymbol, dargestellt durch das bestimmte Eingabemittel.

## Revendications

1. Procédé de réception sécurisée d'un message provenant d'un utilisateur, comprenant :
la génération (401) d'une image (320) représentant une pluralité de moyens d'entrée (321), chacun représentant un symbole d'entrée qui peut être utilisé dans le message;
le codage (402) de l'image, pour chaque pixel dans l'image (320);
en choisissant (423, 427) un premier motif (P0) si le pixel est d'une première couleur et une partie d'une séquence de clés représente une première valeur, ou si le pixel est d'une seconde couleur et la partie représente une seconde valeur, et
en choisissant (424, 426) un second motif (P1) si le pixel est de la seconde couleur et la partie représente la première valeur, ou si le pixel est de la première couleur et la partie représente la seconde valeur;
la transmission (403) pour chaque pixel du motif choisi pertinent à un dispositif que l'utilisateur peut faire fonctionner; la réception (404) d'un jeu de coordonnées provenant du dispositif; la traduction (405) du jeu de coordonnées pour un moyen d'entrée particulier représenté sur l'image (320), et la constitution (406) du message provenant de l'utilisateur comme le symbole d'entrée représenté par le moyen d'entrée particulier.

2. Procédé suivant la revendication 1, dans lequel la première couleur est le noir, la seconde couleur est le blanc, la première valeur est "0" et la seconde valeur est "1".

3. Procédé suivant la revendication 1, dans lequel le message comprend un code d'authentification.

4. Procédé suivant la revendication 1, dans lequel le placement des moyens d'entrée sur l'image (320) est choisi d'une manière aléatoire.

5. Procédé de réception sécurisée d'un message, comprenant la réception d'un motif provenant d'un dispositif de transmission (300), la production sur un premier affichage (501) d'une représentation graphique du motif, la production sur un second affichage (311) d'une représentation graphique d'un premier motif (P0) si une partie d'une séquence de clés représente une première valeur, et la production sur le second affichage (311) d'une représentation graphique d'un second motif (P1) si ladite partie représente une seconde valeur, la réception d'une entrée représentant un jeu de coordonnées provenant d'un utilisateur, et la transmission du jeu de coordonnées au dispositif de transmission (300).

6. Procédé suivant la revendication 5, dans lequel l'entrée est reçue sous la forme d'une pression sur un point particulier du premier affichage (501), le jeu de coordonnées correspondant au point particulier.

7. Dispositif client (301) permettant une transmission sécurisée d'un message, comprenant des moyens de réception (502) destinés à recevoir un motif provenant d'un dispositif de transmission, une mémoire (312) destinée à stocker une séquence de clés, un premier affichage (501) destiné à produire une représentation graphique du motif, un second affichage (311) convenant pour une superposition sur le premier affichage (501), le second affichage (311) étant prévu pour produire une représentation graphique d'un premier motif (P0) si une partie d'une séquence de clés représente une première valeur, et pour produire une représentation graphique d'un second motif (P1) si ladite partie représente une seconde valeur, **caractérisé par** des moyens d'entrée configurés de manière à recevoir une entrée représentant un jeu de coordonnées provenant d'un utilisateur, et des moyens de transmission (502) configurés de manière à transmettre le jeu de coordonnées au dispositif de transmission (300).

8. Dispositif client (301) suivant la revendication 7, dans lequel le second affichage (311) est présenté sous la forme d'une unité (310) physiquement séparée du premier affichage (501), et est doté de la mémoire (312) destinée à stocker la séquence de clés.

9. Produit de programme informatique prévu pour amener un processeur à exécuter le procédé suivant la revendication 1.

10. Produit de programme informatique prévu pour amener un processeur à exécuter le procédé suivant la revendication 5.

11. Serveur (300) pour une réception sécurisée d'un message provenant d'un utilisateur, comprenant :
des moyens destinés à la génération (401) d'une image (320) représentant une pluralité de moyens d'entrée (321), chacun représentant un symbole d'entrée qui peut être utilisé dans le message;
des moyens pour le codage (402) de l'image, pour chaque pixel dans l'image (320);
en choisissant (423, 427) un premier motif (P0) si le pixel est d'une première couleur et une partie d'une séquence de clés représente une première valeur, ou si le pixel est d'une seconde couleur et la partie représente une seconde valeur, et
en choisissant (424, 426) un second motif (P1) si le pixel est de la seconde couleur et la partie représente la première valeur, ou si le pixel est de la première couleur et la partie représente la seconde valeur;
des moyens pour la transmission (403) pour chaque pixel du motif choisi pertinent à un dispositif que l'utilisateur peut faire fonctionner;
des moyens pour la réception (404) d'un jeu de coordonnées provenant du dispositif; pour la traduction (405) du jeu de coordonnées pour un moyen d'entrée particulier représenté sur l'image (320), et des moyens pour la constitution (406) du message provenant de l'utilisateur comme le symbole d'entrée représenté par le moyen d'entrée particulier.
